(19) **Europäisches Patentamt**

**European Patent Office**

**Office européen des brevets**

(11) **EP 0 915 559 B1**

(12) **EUROPEAN PATENT SPECIFICATION**

(45) Date of publication and mention
of the grant of the patent:
**12.07.2006 Bulletin 2006/28**

(51) Int Cl.:
**H02M 1/00** (2006.01)

(21) Application number: **97830584.5**

(22) Date of filing: **10.11.1997**

(54) **Non linear multiplier for switching mode controller**

Nichtlinearer Multiplizierer für einen Schaltregler

Multiplicateur non linéaire pour un hâcheur de régulation

(84) Designated Contracting States:
**DE FR GB IT**

(43) Date of publication of application:
**12.05.1999 Bulletin 1999/19**

(73) Proprietor: **STMicroelectronics S.r.l.**
**20041 Agrate Brianza MI (IT)**

(72) Inventors:
• **Pidutti, Albino**
**33100 Udine (IT)**

• **Legnani, Marco Alessandro**
**21047 Saronno, (IT)**

(74) Representative: **Pellegri, Alberto et al**
**c/o Società Italiana Brevetti S.p.A.**
**Piazza Repubblica, 5**
**21100 Varese (IT)**

(56) References cited:
**EP-A- 0 496 529**       **EP-A- 0 582 813**
**US-A- 4 940 929**       **US-A- 5 264 780**
**US-A- 5 359 276**

**Description**

FIELD OF APPLICATION OF THE INVENTION

The present invention relates to analog circuits and in particular to multiplier circuits for control loops in switching mode drive systems.

BACKGROUND OF THE INVENTION

In the field of DC-DC converters, SMPS systems (Switching Mode Power Supply) in PFC systems (Power Factor Correction), the control loop is commonly realized in an integrated form and includes a two signal multiplier, an input signal to which is commonly an error signal derived from a feedback line while the other input signal may be for example a signal representative of the value of the supply voltage or of another pertinent parameter.

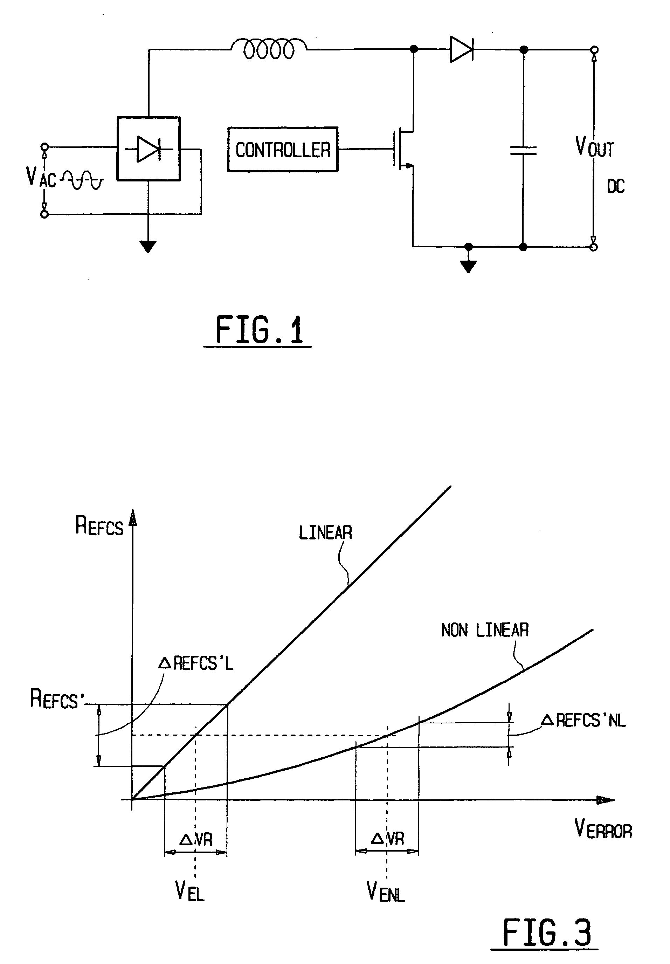

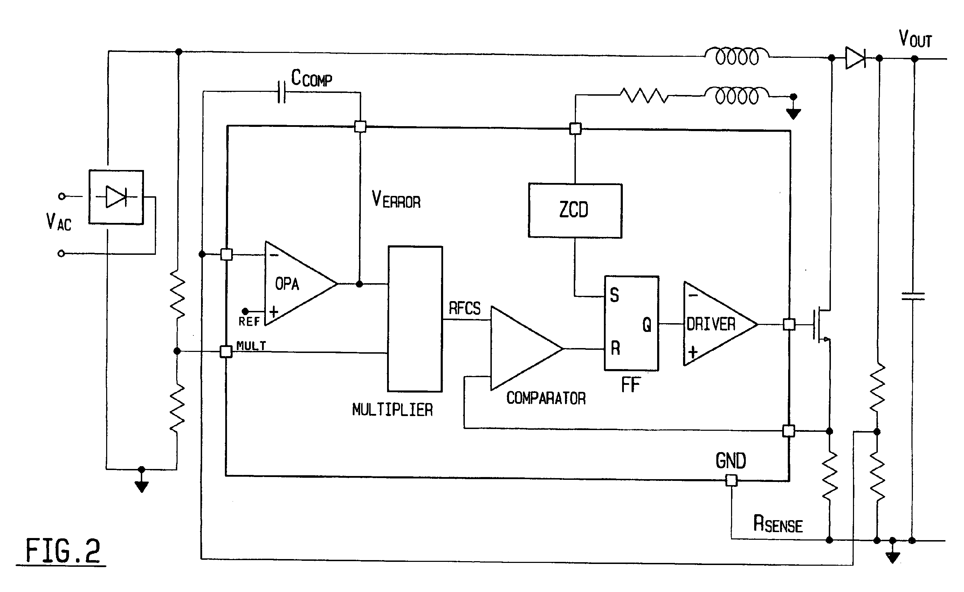

A typical application that may be taken as an example is a power factor correction (PFC) circuit, whose circuit follows the same topology of a typical boost converter, with the only difference that the supply voltage is a rectified sinusoid rather than a constant voltage, as shown in the scheme of Fig. 1.

The control block (CONTROLLER) of the PFC stage ensures that the current drawn from the AC line is sinusoidal and in phase with the mains voltage ($V_{AC}$). From the point of view of the exploitation of electric energy, this condition is indeed the most efficient.

Usually the PFC stage is realized between the AC line and the load (often represented by electronic circuits)

Fig. 2 shows a typical block diagram of a PFC stage.

A feedback signal of the output voltage $V_{OUT}$ is fed to the inverting input of an operational amplifier OPA, that outputs an error signal $V_{ERROR}$, which is fed to a first input of the multiplier circuit. To the other input of the multiplier circuit is fed a fraction of the rectified mains voltage.

The output signal of the multiplier circuit is used as a reference signal for the comparator of the current flowing through the power device and is given by the expression:

$$R_{EFCS} = K * V_{ERROR} * V_{MULT}$$

where K represents the characteristic constant of the multiplier circuit.

The power device turns off when on the current sensing resistor $R_{SENSE}$ is detected a voltage higher than the output signal $R_{EFCS}$ of the multiplier

The turn on signal of the power device originates from the ZCD block and takes place upon the decay to zero of the recirculating current in the inductor.

The present invention concerns in particular the multiplier circuit used in this type of applications.

In these applications the control loop easily denounces unsatisfactory limits of stability and of immunity to the noise that may come from the AC line and/or originate from the system switchings.

As far as stability is concerned, the open loop gain of the system illustrated in Fig. 2 is proportional to the square of the AC voltage, to the load resistance and to the multiplier's constant K:

$$G_{LOOP} \propto V_{AC}^2 * R_{LOAD} * K \qquad\qquad (1)$$

Upon an increment of the mains voltage and of the load resistance connected to the output of the circuit, the open loop gain increases and may cause instability. By reducing the value of the multiplier's constant K, the open loop gain is reduced.

Also for what attains to the characteristics of immunity to noise, the value of the constant K of the multiplier circuit of the control loop has a similar effect.

SCOPE AND SUMMARY OF THE INVENTION

A control system has now been found that provides for a decisive improvement of the stability and immunity to noise characteristics without degrading the circuit performances, by employing a multiplier circuit that is purposely made nonlinear, that is in which its constant K is not of a fixed value as in a common multiplier circuit rather it varies in function of the error signal amplitude that is applied to one of the two inputs of the multiplier circuit. Advantageously, the parameter K of the multiplier circuit of the invention decreases when the amplitude of the error signal input thereto decreases.

The nonlinearity of the multiplier circuit of the invention accentuates itself towards smaller and smaller amplitudes of the error signal and attenuates itself with increasingly layer amplitudes of the error signal until the behavior of the multiplier circuit becomes again practically linear. This characteristic is most effective in ensuring an enhanced stability and immunity to noise while maintaining excellent performances of the control system as a whole.

The invention is defined in the annexed claims.

BRIEF DESCRIPTION OF THE DRAWINGS

The different aspects and advantages of the invention will become more evident through the following detailed description of few embodiments and by referring to the annexed drawings, wherein:

Figure 1 shows the diagram of a PFC circuit;

Figure 2 shows a basic diagram of a controller usable in an application as that of Fig. 1;

Figure 3 highlights the comparison between a linear and a nonlinear characteristics of a multiplier circuit;

Figure 4 shows the basic diagram of a nonlinear multiplier of the invention;

Figures 5 and 6 are partial diagrams that illustrate the way in which the multiplier circuit of Fig. 4 is rendered nonlinear, according to the invention;

Figure 7 shows the characteristic curve of the nonlinear multiplier of the invention.

DESCRIPTION OF FEW EMBODIMENTS OF THE INVENTION

Fig. 3 shows the characteristics of a linear multiplier circuit and of a nonlinear multipler circuit (used alternatively in a control system as that shown in Fig. 2), in function of the error signal $V_{ERROR}$. It may be observed that for the same load $R_{EFCS}=R_{EFCS}$, the corresponding $V_{ERROR}$ signal is different in the two cases. In particular

$$V_{EL}(\text{LINEAR CASE}) < V_{ENL}(\text{NONLINEAR CASE}) \qquad (2)$$

By supposing a superimposition of noise of amplitude $\Delta VR$ on $V_{EL}$ and $V_{ENL}$, it can be easily deduced that the $R_{EFCS}$ variation is less in the case of a nonlinear characteristic:

$$\Delta R_{EFCS\,NL}' < \Delta R_{EFCS\,L}' \qquad (3)$$

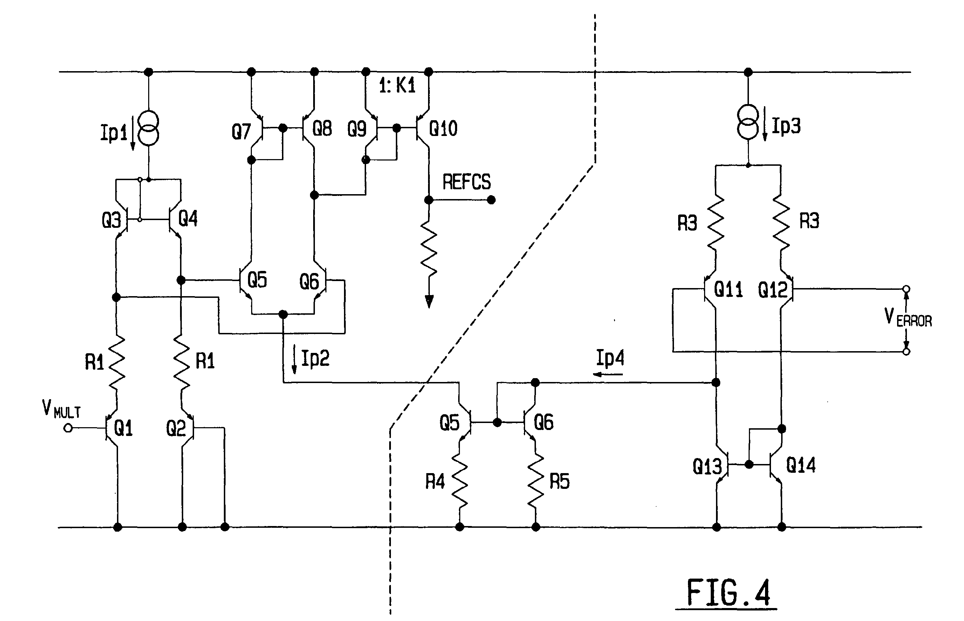

A simplified circuit diagram of a multiplier realized according to the present invention is shown in Fig. 4. A dash line identifies, in the left side portion circuit, the functional circuit diagram of a typical multiplier circuit, while on the right side of the dash line is depicted the specific circuitry that renders nonlinear the behavior of the multiplier in function of compared to the $V_{ERROR}$ signal, according to this invention.

By observing the left side of the scheme, a classical structure of a multiplier circuit is composed by a first differential stage Q1, Q2, R1, Q3, Q4, Ip1, strongly degenerated by the R1 resistors for increasing input dynamic, through which is forced the bias current produced by the dedicated generator Ip1. The function of this first input differential stage is to convert the input signal Vmult in a differential voltage signal between the emitters of Q3 and Q4, according to a linear/logarithmic conversion law. Such a signal is injected in the respective input nodes of a second differential stage, in cascade to the first stage, ,constituted by the transistors Q5, Q6, Q7 and Q8, which operates a logarithmic/linear conversion of the differential input signal in an output current, which is mirrored by the current mirror formed by the transistors Q9 and Q10, on a resistor R2, across the terminals of which is generated the output signal $R_{EFCS}$ of the circuit.

The second argument of the multiplication is represented by a current signal Ip2 such that the functioning of the multiplier corresponds to the following function:

$$R_{EFCS} \approx V_{MULT} \frac{Ip2}{Ip1} \frac{R2}{R1} K1 \qquad\qquad (4)$$

From the above relationship it is observed that the output signal REFCS is proportional to the input signals Vmult and Ip2. The constant K1 coinciding with the mirroring ratio of the output current mirror circuit constituted by the transistor pair Q9, Q10.

By referring to the circuit on the right part of the scheme of Fig. 4, a third differential stage, strongly degenerated to increase its input dynamics, is constituted by the transistors Q11, Q12, Q13, Q14, by the degeneration resistors >R3 and by the bias generator Ip3 and converts the differential input signal $V_{ERROR}$ in an output current Ip4, according to the equation:

$$Ip4 \approx \frac{1}{R3} V_{ERROR} \qquad\qquad (5)$$

As may be noticed, all the relations considered up to now are linear.

The current mirror realized by the pair of transistors Q15 and Q16 and by the degeneration resistors R4 and R5 serves to feed the second signal Ip2 to the respective input of the multiplier circuit, shown on the left side by the dash line.

Normally, the current mirror used for this purpose has a certain mirror ratio n such that

$$\frac{Ip2}{Ip4} = n \qquad\qquad (6)$$

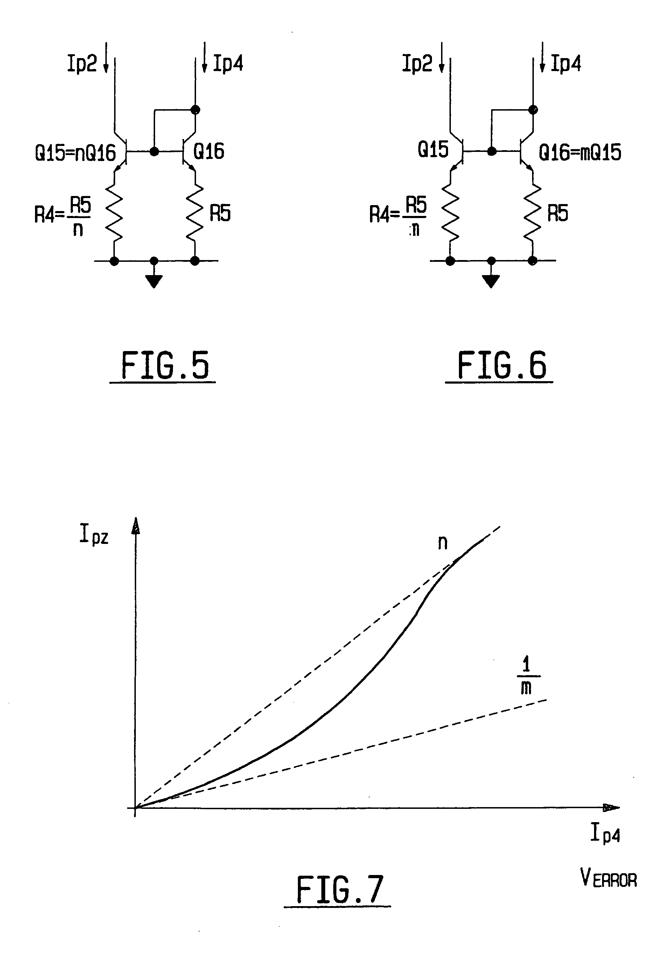

By referring to Fig. 5, it is observed that Q15 has an emitter area equivalent to n times the emitter area of the transistor Q16 and the degeneration resistance of R4 has a value R5/n, thus obtaining the following relation

$$R_{EFCS} = V_{MULT} * \frac{R5}{Ip1\,R4} * K1 * n * \frac{V_{ERROR}}{R3} \qquad\qquad (7)$$

Therefore, the output signal $R_{EFCS}$ is a linear function of both input signals, $V_{MULT}$ and $V_{ERROR}$.

By contrast, according to the present invention, the current mirror constituted by Q15, Q16, R4 an R5 is deliberately made nonlinear by ensuring that the voltage drop on the respective degeneration resistors R4 and R5 be not as it is common for linear mirrors of current.

Fig. 6 shows the circuit of the current mirror modified according to the present invention wherein the area ratio between the transistor pair Q15 and Q16 is made deliberately different from the ratio between the degeneration resistors R4 and R5. In practice, at low injection levels of current the mirroring ratio is substantially given by

$$\frac{Ip2}{Ip4} = \frac{1}{m}$$

where m is the area ratio between the two transistors Q15 and Q16, whereas at high injection levels of current the mirroring ratio becomes more an more almost identical to the ratio between the degeneration resistors, that is

$$\frac{Ip2}{Ip4} = n .$$

This peculiar characteristic is graphically illustrated in the diagram of Fig. 7, by considering to have in the abscissa, indifferently, either the current Ip4 or the $V_{ERROR}$ signal.

By the relative dimensioning of the circuit parameters the range of accentuated nonlinearity may be easily designed to correspond to the expected dynamic of the input signal $V_{ERROR}$.

In this way, an enhanced stability and immunity to noise of the control loop are achieved, according to the considerations already made in relation to the diagram of Fig. 3.

## Claims

1. A nonlinear multiplier circuit of a first signal ($V_{MULT}$) and of a second signal ($V_{ERROR}$) according to a multiplying factor proportional to the amplitude of said second signal, comprising a first differential stage (Q1, Q2, R1, Q3, Q4, Ip1) degenerated to increase its input dynamic, a second nondegenerated differential stage (Q5, Q6, Q7, Q8) and an output stage constituted by a current mirror (Q9, Q10) having a resistive load (R2), said first differential stage operating a linear/logarithmic conversion of said first signal ($V_{MULT}$) in an input differential voltage for said second nondegenerated differential stage which operates a logarithmic/linear conversion of said differential voltage in an input current of said output mirror and means generating a current (Ip2) proportional to said second signal ($V_{ERROR}$) and forcing said current (Ip2) through said second differential stage, **characterized in that** the factor of multiplication of said multiplier is not constant and progressively decreases from a first value towards a second value when the level of said second signal (Verror) decreases, said means consist of a current mirror circuit composed by a first diode input configured transistor (Q16) and a second output transistor (Q15), each connected through a degeneration resistor (R4, R5) to a common supply node (GND) of the circuit and in which the emitter area ratio between said transistors (Q16, Q15) is different from the ratio of the respective degeneration resistors (R4, R5).

2. The nonlinear multiplier circuit according to claim 1, **characterized in that** said second signal ($V_{ERROR}$) is a differential signal and the circuit comprises a third differential stage (Q11, Q12, Q13, Q14, R3, Ip3), degenerated to increase the input dynamic, converting said differential voltage signal ($V_{ERROR}$) in an output current (Ip4), which is forced through said input transistor (Q16) of said current mirror.

3. A DC-DC converter or power factor correcting system comprising a control loop with a multiplier circuit according to claim 1.

## Patentansprüche

1. Nichtlineare Schaltung zum Multiplizieren eines ersten Signals ($V_{MULT}$) mit einem zweiten Signal ($V_{ERROR}$) in Übereinstimmung mit einem Multiplikationsfaktor, der zu der Amplitude des zweiten Signals proportional ist, mit einer ersten differentiellen Stufe (Q1, Q2, R1, Q3, Q4, Ip1), die entartet ist, um ihre Eingangsdynamik zu erhöhen, einer zweiten nicht entarteten differentiellen Stufe (Q5, Q6, Q7, Q8) und einer Ausgangsstufe, die durch einen Stromspiegel (Q9, Q10) mit einer resistiven Last (R2), gebildet ist, wobei die erste differentielle Stufe eine linear/logarithmische Umsetzung des ersten Signals ($V_{MULT}$) in eine differentielle Eingangsspannung für die zweite nicht entartete differentielle Stufe ausführt, die eine logarithmisch/lineare Umsetzung der differentiellen Spannung in einen Eingangsstrom des Ausgangsspiegels ausführt, und Mitteln, die einen Strom (Ip2) erzeugen, der zu dem zweiten Signal ($V_{ERROR}$) proportional ist, und den Strom (Ip2) durch die zweite differentielle Stufe zwingen, **dadurch gekennzeichnet, dass** der Multiplikationsfaktor des Multiplizierers nicht konstant ist und von einem ersten Wert progressiv zu einem zweiten Wert abnimmt, wenn der Pegel des zweiten Signals ($V_{ERROR}$) abnimmt, und die Mittel aus einer Stromspiegelschaltung bestehen, die aus einem als Diode konfigurierten ersten Eingangstransistor (Q16) und aus einem zweiten Ausgangstransistor (Q15) gebildet ist, wovon jeder über einen Entartungswiderstand (R4, R5) mit einem gemeinsamen Versorgungsknoten (GND) der Schaltung verbunden ist und wobei das Emitter-Flächenverhältnis zwischen den Transistoren (Q16, Q15) von dem Verhältnis der entsprechenden Entartungswiderstände (R4, R5) verschieden ist.

2. Nichtlineare Multiplizierschaltung nach Anspruch 1, **dadurch gekennzeichnet, dass** das zweite Signal ($V_{ERROR}$) ein differentielles Signal ist und die Schaltung eine dritte differentielle Stufe (Q11, Q12, Q13, Q14, R3, Ip3) umfasst, die entartet ist, um die Eingangsdynamik zu erhöhen, und das differentielle Spannungssignal ($V_{ERROR}$) in einen Ausgangsstrom (Ip4) umsetzt, der durch den Eingangstransistor (Q16) des Stromspiegels gezwungen wird.

3. Gleichstrom/Gleichstrom-Umsetzer oder Leistungsfaktor-Korrektursystem, das eine Steuerschleife mit einer Multipliziererschaltung nach Anspruch 1 umfasst.

**Revendications**

1. Circuit multiplieur non-linéaire d'un premier signal ($V_{MULT}$) et d'un second signal ($V_{ERROR}$) par un facteur de multiplication proportionnel à l'amplitude du second signal, comprenant un premier étage différentiel (Q1, Q2, R1, Q3, Q4, Ip1) dégénéré pour augmenter sa dynamique d'entrée, un second étage différentiel non dégénéré (Q5, Q6, Q7, Q8) et un étage de sortie constitué d'un miroir de courant (Q9, Q10) ayant une charge résistive (R2), le premier étage différentiel opérant une conversion linéaire-logarithmique du premier signal ($V_{MULT}$) en une tension différentielle d'entrée pour le second étage différentiel non dégénéré qui opère une conversion logarithmique-linéaire de la tension différentielle dans un courant d'entrée du miroir de sortie et des moyens produisant un courant (Ip2) proportionnel au second signal ($V_{ERROR}$) et forçant le courant (Ip2) à travers le second étage différentiel, **caractérisé en ce que** le facteur de multiplication du multiplieur n'est pas constant et diminue progressivement depuis une première valeur vers une seconde valeur quand le niveau du second signal ($V_{ERROR}$) diminue, ledit moyen consistant en un circuit miroir de courant constitué d'un premier transistor d'entrée connecté en diode (Q16) et d'un second transistor de sortie (Q15), chacun étant connecté par l'intermédiaire d'une résistance de dégénération (R4, R5) à un noeud d'alimentation commun (GND) du circuit et dans lequel le rapport entre les surfaces d'émetteur des transistors (Q16, Q15) est différent du rapport des résistances de dégénérescence respectives (R4, R5).

2. Circuit multiplieur non linéaire selon la revendication 1, **caractérisé en ce que** le second signal ($V_{ERROR}$) est un signal différentiel et le circuit comprend un troisième état différentiel (Q11, Q12, Q13, Q14, R3, Ip3) dégénéré pour augmenter sa dynamique d'entrée, convertissant le signal de tension différentiel ($V_{ERROR}$) en un courant de sortie (Ip4) qui est forcé dans le transistor d'entrée (Q16) du miroir de courant.

3. Convertisseur continu-continu ou système de correction de facteur de puissance comprenant une boucle de commande avec un circuit multiplieur selon la revendication 1.

## FIG.1

## FIG.3

FIG.2

FIG.4

EP 0 915 559 B1

Ip2 ↓     ↓ Ip4

Q15=nQ16        Q16

$R4=\dfrac{R5}{n}$        R5

## FIG.5

Ip2 ↓     ↓ Ip4

Q15        Q16=mQ15

$R4=\dfrac{R5}{:n}$        R5

## FIG.6

$I_{pz}$

n

$\dfrac{1}{m}$

$I_{p4}$

$V_{ERROR}$

## FIG.7